# EUROPEAN PATENT SPECIFICATION

(11) **EP 1 046 238 B1**
(45) Date of publication and mention of the grant of the patent: **28.04.2010**
(21) Application number: 99944840.0
(22) Date of filing: 27.09.1999
(51) Int. Cl.: H04B 1/16, H04B 10/10, H04M 1/72

(54) **METHOD AND APPARATUS FOR TRANSCEIVING , RECEIVING AS WELL AS TRANSMITTING**
VERFAHREN UND GERÄT ZUM SENDEN , EMPFANGen UND SEND-EMPFANG
PROCEDE ET APPAREIL D'EMISSION/RECEPTION, DE RECEPTION ET D'EMISSION

(30) Priority: 28.09.1998 JP 27360898
(43) Date of publication of application: 25.10.2000
(73) Proprietor: Sony Computer Entertainment Inc., Tokyo 107-0052 (JP)
(72) Inventor: KAWAI, Eiji Sony Computer Entertainment Inc., Minato-ku Tokyo 107-0052 (JP)
(74) Representative: Hedley, Nicholas James Matthew
(86) International application number: PCT/JP1999/005253
(87) International publication number: WO 2000/019622

(56) References cited:
- WO-A-90/11652
- WO-A-96/21286
- WO-A-98/02006

## Description

### BACKGROUND OF THE INVENTION

### Field of the Invention

The present invention relates to apparatus for and method of transmitting and receiving signals, apparatus for and method of receiving signals, and apparatus for and method of transmitting signals, and more particularly to a transmitting and receiving method, a receiver and a receiving method, as well as a transmitter and transmitting method suited to an infrared transceiver system that transmits and receives data by means of infrared rays.

### Background of the Invention

There are conventional bi-directional communication technologies used for the bi-directional communication of data between two communicators. The amount of data exchanged in such bi-directional communication has become very large, so higher speeds for this communication are desirable. Even in such cases, it is preferable that the processes of transmitting and receiving data be performed with power consumption kept as low as possible.

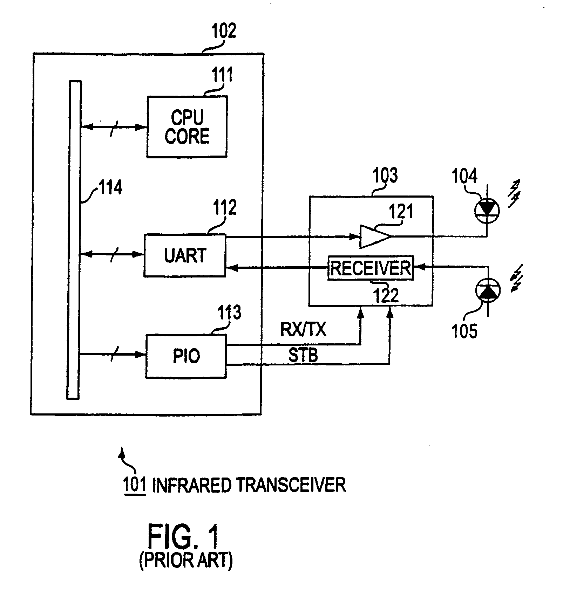

One type of the system for the bi-directional communication of data is an infrared transceiver system that transmits and receives data by means of infrared rays. An infrared transceiver that permits such an infrared transceiver system, as shown in Fig. 1, comprises a microcomputer 102 constituting a control means, an infrared transceiver module 103 that is controlled by the microcomputer 102, and an LED (Light Emitting Diode) 104 and PD (Photo Diode) 105 which serve as a light emitter and a light receiver, respectively.

In addition, the aforementioned microcomputer 102 further comprises a CPU core 111 that controls the various blocks, a UART (Universal Asynchronous Receiver/Transmitter) 112 that constitutes the data transmitter/receiver for transmitting and receiving data to and from the infrared transceiver module 103, and a PIO (Parallel I/O) 113 for transmitting control commands to the infrared transceiver module 103, all of which are connected to a data bus 114.

In addition, the infrared transceiver module 103 further comprises an amplifier 121 which is a driver for the aforementioned LED 104, and a receiver circuit (Receiver) 122 which constitutes a receiver for receiving signals from the aforementioned PD 105.

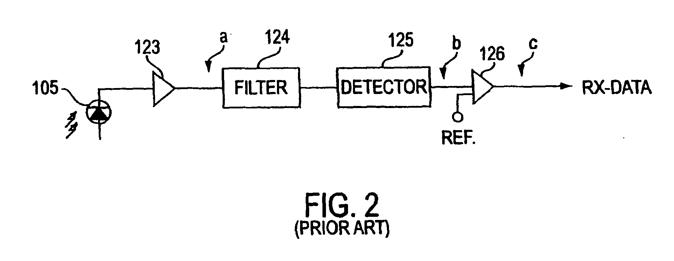

Here, as shown in Fig. 2, the receiver circuit 122 further comprises an I/V amplifier 123 for amplifying optical signals received from the PD 105, a filter (Filter) 124 that performs the filtering of output signals from this I/V amplifier 123, a detector (Detector) 125 that detects output signals from this filter 124, and a comparator 126 that compares the output signals from this detector 125 with a predetermined reference value (the "comparator level") and provides output of a shaped pulse.

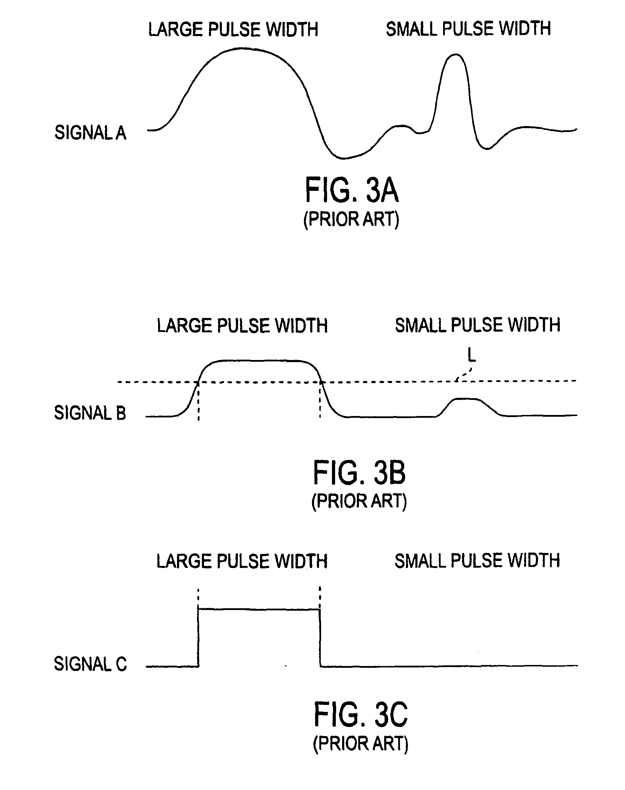

In the receiver circuit 122 constituted as such, the signal waveform in each block based on the signal received by the PD 105 may become as shown in Fig. 3A through Fig. 3C. Here, the signal waveform shown in Fig. 3A is the signal output from the I/V amplifier 123 (signal a shown in Fig. 2), a signal waveform shown in Fig. 3B being that of the signal output from the detector 125 (signal b shown in Fig. 2) and the signal waveform shown in Fig. 3C being that of the signal output from the comparator 126 (signal c shown in Fig. 2).

Under the control of the microcomputer 102, the infrared transceiver 101 performs the generation of protocol, formatting and parallel/serial conversion upon the transmission of data, and performs the serial/parallel conversion and data analysis upon the receiving of data.

Moreover, the infrared transceiver module 103 performs the driving of the LED 104 during transmission and, upon reception, amplifies signals from the PD 105 and shapes their pulses. It should be noted that in the microcomputer 102, the PIO 113 uses the RX/TX control commands to switch the infrared transceiver module 103 between the transmission and reception modes, and also uses the standby (STB) command to set it in its communication "OFF" mode.

In passing, since the microcomputer 102 is manufactured using the CMOS process, the current consumption is reduced through the miniaturization of devices and lowering of voltage. However, since it is general that the infrared transceiver module 103 is a analog circuit, a constant current is required during the driving of the LED 104 and during the reception by the PD 105, so it is difficult to lower the current consumption.

On the other hand, the following problem also occurs. Here, regarding the signal waveform in various blocks of the receiver circuit 122, we shall explain the case in which, as shown in the aforementioned Fig. 3A, the PD 105 receives a large (or wide) pulse width (low frequency) or small (or narrow) pulse width (high frequency) infrared pulse, for example.

For example, for a large pulse width (low frequency) signal, while the edge is delayed (blunted) in the response of the detector 125, the pulse width is large or wide so the pulse continues until the response of the detector 125 become stabilized, and namely the trailing edge of the pulse does not appear. Therefore, as shown in Fig. 3B, the detected signal b rises to the comparator level L. Thus, in the comparator 126, as shown in Fig. 3C, a stable shaped pulsed signal c corresponding to the received signal can be stably obtained.

However, for a small pulse width (high frequency) signal, the next pulse edge appears before the response is stabilized in the detector 125, so that, even though, as shown in Fig. 3B, the detected signal b rises, its level does not reach the comparator level L. Thus, the comparator 126 cannot shape a pulse.

It is possible to increase the responsiveness of the receiver circuit 122 to obtain formed pulses from pulsed infrared rays with a small pulse-width. For example, it can be considered that for increasing the responsiveness of the receiver circuit 122, it may be effective to increase the bias current of the I/V amplifier 123 and comparator 126, etc. or to reduce the time constants of the filter 124 and detector 125. However, if such improved methods are adopted, this will result in the problem of increased operating current. The increasing of the communication speed of the infrared transceiver module 103 involves a trade-off with reducing the current consumption.

In addition, on the receiver circuit 122 side in particular, the receive standby state is normally necessary, so suppressing the power consumption of the entire device in question tends to inhibit increasing the communication speed.

### SUMMARY OF THE INVENTION

In view of such aspects, it is an object of the present invention to eliminate the above disadvantages and to provide transceiving apparatus and method, receiving apparatus and method, transmitting apparatus and method that permit high-rate communication and also permit data to be received while reducing current consumption.

The transceiver according to the present invention comprises a transmission means that, at the start of transmission, transmits a signal of a second signal form that has a pulse rate lower than a signal of a first signal form and which is transmitted prior to said signal of a first signal form; and a reception means which upon reception of said signal of a second signal form, receives said signal of a first signal form by switching a mode from a first reception mode to a second reception mode which is a reception mode with a higher reception rate than the first reception mode.

In addition, the transceiver according to the present invention transmits, at the end of transmission of said signal of a first signal form, said signal of a first signal form including an end signal that indicates the end of said signal of a first signal form, and upon receipt of said end signal, said reception means switches to said first reception mode.

Further, in the transceiver of the present invention, the current consumption of said reception means in said first reception mode is set smaller than the current consumption of said reception means in said second reception mode.

The transceiver according to the present invention further comprises a transmission means that selectively transmits, as a pair, a plurality of information signals having different pulse rates and a plurality of guide signals which respectively correspond to said plurality of information signals and which are transmitted prior to the transmission of same, and a reception means that, in response to receipt of each of said guide signals, switches its mode from reception standby mode to a reception mode corresponding to the pulse rate of the information signal paired with said guide signal to receive said information signal.

In order to solve the aforementioned problems, the transceiving method according to the present invention comprises a transmission step wherein, at the start of transmission, a signal of a second signal form that has a pulse rate lower than a signal of a first signal form is transmitted prior to said signal of a first signal form, and a reception step wherein, upon the reception of a signal of a second signal form, the mode is switched from a first reception mode to a second reception mode with a reception rate higher than this first reception mode and said signal of a first signal form is received.

In the transceiving method, a signal of a second signal form is transmitted prior to said signal of a first signal form in the transmission step, and said signal of a second signal form is received in the reception step, so that a switching from the first reception mode to the second reception mode in order to receive a signal of a first signal form is performed for reception of a signal of a first signal form.

The transceiving method permits the reception means that receives signals to set its mode to a second reception mode with a high reception rate only when receiving a signal of the first signal form.

In addition, in order to solve the aforementioned problems, a receiver according to the present invention comprises a reception means that receives signals with switching between a first reception mode and a second reception mode having a higher reception rate than this first reception mode; and a control means that, upon reception of a signal of a second signal form, controls the switching of the reception means from the first reception mode to the second reception mode, and allows commencement of the reception of a signal of a first signal form.

In the receiver that has such a configuration, upon reception of a signal of a second signal form, the control means controls the switching of the reception means from the first reception mode to the second reception mode having a higher reception rate than that of the first reception mode, and allows commencement of the reception of a signal of a first signal form.

Thereby, the receiver is brought in its second reception mode with a high reception rate only when receiving a signal of the first signal form.

Furthermore, in the receiving method according to the present invention, upon the reception of a signal of a second signal form, the mode is switched from a first reception mode to a second reception mode with a reception rate higher than this first reception mode and said signal of a first signal form is received.

The signal receiving method allows the receiver to be brought in its second reception mode with a high reception rate only when receiving a signal of the first signal form.

In addition, in order to solve the aforementioned problem, a transmitter according to the present invention comprises a transmission means that transmits signals, and a transmission control means that controls the transmission means so that at the start of transmission, it transmits a signal of a second signal form having a pulse rate lower than a signal of a first signal form, prior to said signal of a first signal form.

In the transmitter of this invention having the above arrangement, the transmission control means controls the transmission means for transmitting signals so that at the start of transmission, it transmits the signal of a second signal form having a pulse rate lower than the signal of a first signal form, prior to said signal of a first signal form.

This transmitter allows the receiver side to be brought in its second reception mode with a high reception rate only when receiving a signal of the first signal form.

In the transmitting method according to the present invention, ion order to solve the above-mentioned problem, at the start of transmission, the signal of a second signal form that has a pulse rate lower than the signal of a first signal form is transmitted prior to said signal of a first signal form.

The transmitting method of the invention allows the receiver side to be brought into ins second reception mode with a high reception rate only when receiving a signal of the first signal form.

### Brief Description of the Drawings

Fig. 1 is a block diagram showing the configuration of a conventional infrared transceiver;
Fig. 2 is a block diagram showing the configuration of a receiver circuit having infrared transceiver module of the infrared transceiver;
Figs. 3A-3C show signal waveforms in the various blocks of the aforementioned receiver circuit:
Fig. 4 is a block diagram showing a configuration of an infrared transceiver which is an embodiment of the present invention;
Fig. 5 is a diagram showing a data protocol adopted in an infrared transceiver system using the aforementioned infrared transceiver on the receiving side;
Fig. 6 is a diagram showing mode control commands sent by a CPU to the infrared transceiver module in the aforementioned infrared transceiver; and
Fig. 7 is a flow chart showing the process of changing the mode of the aforementioned infrared transceiver from low-rate reception mode to high-rate reception mode.

### DETAILED DESCRIPTION OF THE PREFERRED EMBODIMENTS

Here follows a detailed explanation of an embodiment of the present invention made with reference to drawings. This embodiment shows a receiver according to the present invention, applied to an infrared transceiver that transmits and receives data by using infrared rays in an infrared transceiver system.

The infrared transceiver is configured such that it receives a signal of a first signal form and a signal of a second signal form that has a lower pulse rate (namely, a lower frequency) than said signal of a first signal form and that is transmitted prior to said signal of a first signal form.

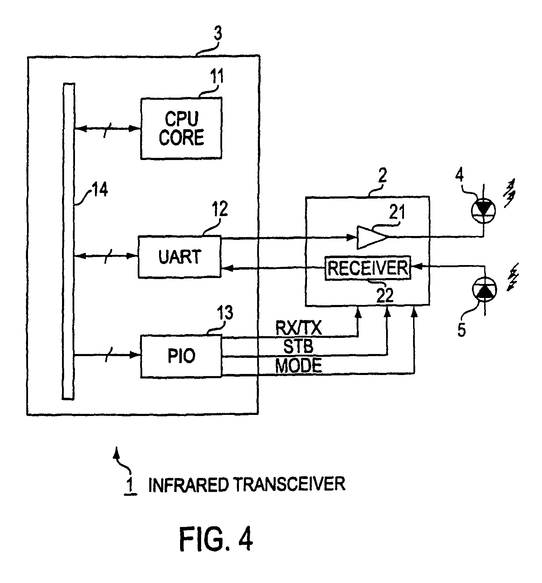

Specifically, as shown in Fig. 4, the infrared transceiver 1 comprises an infrared transceiver module 2 which is a reception means that receives signals by switching between a first reception mode which is a low-rate reception mode and a second reception mode which is a reception mode with a higher reception rate than the first reception mode, and a microcomputer 3 which is a control means that, upon reception of a signal of a second signal form, controls the switching of the infrared transceiver module 2 from the first reception mode to the second reception mode for commencing the reception of a signal of a first signal form. Moreover, this infrared transceiver 1 also comprises an LED (Light Emitting Diode) 4 which serves as the infrared light emitter and a PD (Photo Diode) 5 which serves as the infrared light receiver.

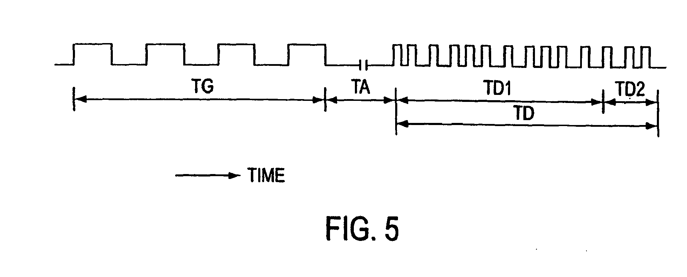

Here, the signals of the first and second signal forms which serve as the protocol (pulse sequence) used in the infrared transceiver system may have forms as shown in Fig. 5, for example.

As shown in Fig. 5, the signal of the first signal form consists of a signal TD that has a high pulse rate (namely, a small pulse width or high frequency), and the signal of the second signal form consists of a signal TG that has a low pulse rate (namely, a large pulse width or low frequency). Moreover, the signal TA lies between the signal TD and the signal TG.

Here, the aforementioned signal TD consists of various information for use in the infrared transceiver 1. Specifically, the signal TD consists of a signal TD 1 and a signal TD2, where signal TD1 may be the data required for data analysis and signal TD2 is an end signal that indicates the end of the signal TD in the signal of the first signal form.

In addition, the aforementioned signal TG is a pulse sequence that is transmitted prior to the aforementioned signal TD, or a so-called guide pulse that serves as header information.

Moreover, the aforementioned signal TA has a length of a period sufficient for the operation of switching over from low-rate reception mode to high-rate reception mode.

Signals of such form are transmitted with the signal TG of the second signal form transmitted prior to the signal TD of the first signal form and with signal TA transmitted such that it lies between signal TG and signal TD.

Next, we shall describe the various blocks that constitute this infrared transceiver 1.

Referring to Fig. 4 again, the aforementioned infrared transceiver module 2 constitutes a unit that drives the aforementioned LED 4 and performs such signal processing as amplifying the signal received from the PD 5. The infrared transceiver module 2 comprises an amplifier 21 and a receiver circuit (Receiver) 22. The infrared transceiver module 2 may be configured as an analog circuit, for example.

The amplifier 21 is a unit that amplifies the signal output to the aforementioned LED 4. The amplifier 21 amplifies the signal input from the UART 12 of the microcomputer 3, and drives the LED 4 based thereupon. Specifically, the infrared transceiver module 2 uses this amplifier 21 to cause the LED 4 to emit light only when a pulse transmitted from the microcomputer 3 is received. The light emission may require a current of several mA to several dozen mA, for example.

The receiver circuit 22 is a unit that is inputted with the optical signal received by the PD 5. The receiver circuit 22 may have a constitution similar to that of the receiver circuit 122 shown on Fig. 1 and Fig. 2 above. Specifically, it comprises an I/V amplifier 123 for amplifying the optical signals received from the PD 5, a filter 124 that performs the filtering of output signals from this I/V amplifier, a detector 125 that detects output signals from this filter, and a comparator 126 that compares the output signals from this detector against a base value (the "comparator level") and provides output of a logical value of 1 over only the period during which the level of the optical signal exceeds the reference value, and provides output of a logical value of 0 over all other periods.

The infrared transceiver module 2 consisting of such constituent components is constituted such that, based on control signals from the microcomputer 3, it can be switched to one of transmission mode for transmitting data, a reception mode for receiving data and a standby mode used when no communication function is used at all. Moreover, in reception mode the infrared transceiver module 2 has low-rate reception mode for receiving data at a low rate and high-rate reception mode for receiving data at a high rate. Note that in this embodiment, a half-duplex transmission mode is adopted
in which only transmitting or receiving can be performed at one time (both cannot be performed simultaneously).

Here, high-rate reception mode is the reception mode for receiving a signal of the first signal form (signal TD) with a small pulse width. Low-rate reception mode is the reception mode, i.e., a so-called reception standby mode, for receiving signals of the second signal form (signal TG (guide pulse)) with a large pulse width, wherein the current consumption is set lower than that used in high-rate reception mode.

In low-rate reception mode, the infrared transceiver module 2 is on standby for the input of the guide pulse TG with its circuit operation that uses the minimum bias current and the like necessary, namely, with its circuit operation that suppresses current consumption.

The infrared transceiver module 2 is controlled by various control information from the microcomputer 3, and performs such switchovers to the transmission mode, the low-rate reception mode and the high-rate reception mode, and the standby mode based thereupon. Specifically, the microcomputer 3 uses transmission/reception control commands (RX/TX) to switch the infrared transceiver module 2 between the transmission and reception modes, uses the standby control command (STB) to bring the infrared transceiver module 2 in its standby mode, and uses the mode control command (MODE) to switch the infrared transceiver module 2 between low-rate reception mode and high-rate reception mode in a reception mode.

The microcomputer 3 which thus controls the infrared transceiver module 2 comprises a CPU core 11, a UART (Universal Asynchronous Receiver/Transmitter) 12, and a PIO (Parallel I/O) 13, all of which are connected to a data bus 14. The microcomputer 3 is manufactured using the CMOS process and is configured as a so-called single-chip microcomputer.

The aforementioned UART 12 is constituted as a block for transmitting and receiving data to and from the infrared transceiver module 2.

The aforementioned PIO 13 is a parallel I/O that transmits various control commands to the infrared transceiver module 2. The PIO 13 constitutes the interface for control commands to the aforementioned infrared transceiver module 2.

The aforementioned CPU core 11 is constituted such that it has control functions for controlling the various blocks. As described above, this CPU core 11 uses various commands to control the infrared transceiver module 2, and has functions for switching between transmission mode and reception mode, switching the mode between the low-rate reception mode and the high-rate reception mode in the reception mode, and switching the mode to its standby mode. Via the PIO 13, the CPU core 11 controls the various modes of the infrared transceiver module 2 by means of the transmit/receive control commands RX/TX, the standby control command STB and the mode control command MODE.

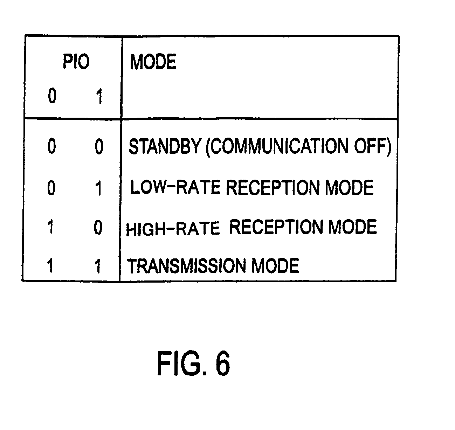

Note that the various control commands may be formed of 2 bits, for example. In this case, the control commands can be allocated in a truth table as shown in Fig. 6, so that for example, standby mode has a value of "00," low-rate reception mode has a value of "01," high-rate reception mode is "10" and transmission mode has a value of "11." Thereby, the control of modes can be carried out not by using 3 bits each of which indicates 1 function = 1 bit, but by using only 2 bits of information.

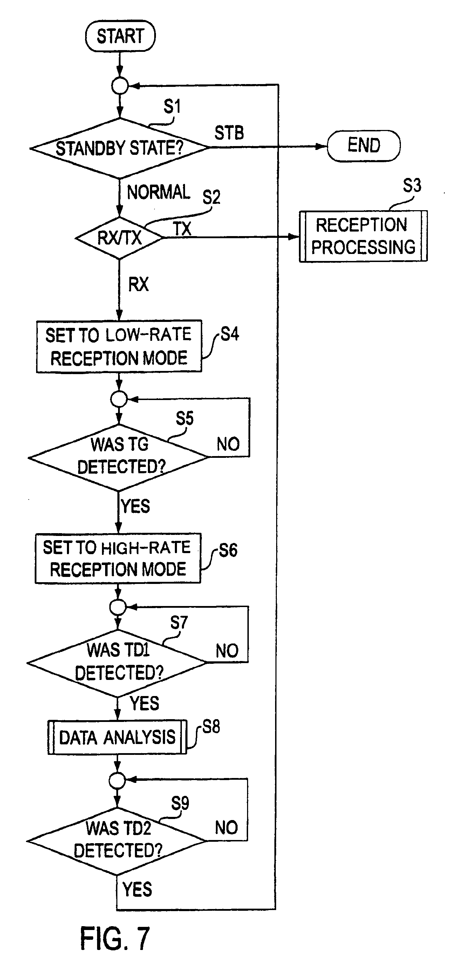

Fig. 7 specifically shows an example of a series of process steps performed at the time that this CPU core 11 receives data.

First, in Step S1, the CPU core 11 detects whether or not the mode should be in the standby mode in which no communication function is used at all. Here, if the standby mode is confirmed, the CPU core 11 transmits the standby control command STB to the infrared transceiver module 2 to halt all circuits of the infrared transceiver module 2 and end this process. If not (in normal mode), the CPU core 11 advances to Step S2.

In Step S2, the CPU core 11 determines whether the mode should be in transmission mode or reception mode, and in the case of transmission (TX) mode, it transmits the transmission control command TX to the infrared transceiver module 2 and begins the transmission process in Step S3.

However, if it is determined that the mode should be in reception (RX) mode in Step S2, in Step S4 the CPU core 11 uses the mode control command MODE to set the infrared transceiver module 2 to low-rate reception mode. Thereby, the infrared transceiver module 2 is brought in the state in which it is able to receive the signal TG.

Regarding the receipt of the signal TG, in the following Step S5 the CPU core 11 determines whether or not the signal TG has been detected. Here the CPU core 11 awaits the input of the guide pulse which is the signal TG.

Upon confirming the input of the signal TG, the CPU core 11 proceeds to Step S6 and uses the mode control command MODE to set the infrared transceiver module 2 to its high-rate reception mode. Only then does the infrared transceiver module 2 increase the current consumption and receive the data consisting of high-rate pulses called the signal TD. It is determined that the time required for the operation of switching from low-rate reception mode to high-rate reception mode is stipulated to be within the length of the signal TA described above.

In the high-rate reception mode, the CPU core 11 awaits the input of the signal TD1 in the subsequent Step S7. Here in Step S8, upon confirming the input of the signal TD 1, the CPU core 11 performs data analysis on the data consisting of the signal TD1. In the data analysis, data processing is performed on the data consisting of the received signal TD1.

In the subsequent Step S9, upon detecting the end signal TD2, the CPU core 11 is triggered to return to the first step in this process, namely, the aforementioned Step S1.

The infrared transceiver 1 configured as above performs the processes of transmitting and receiving data. Moreover, the infrared transceiver 1 performs the reception of data by switching between the low-rate reception mode and the high-rate reception mode in data reception mode. Specifically, the infrared transceiver 1 is always brought in the receive standby state in low-rate reception mode except when, in reception mode, the signal TD is received.

In passing, in a conventional infrared transceiver the microcomputer is formed of a digital circuit manufactured by the CMOS process, so its current consumption is extremely low. Moreover, the power consumption tends to become even lower as the circuit patterns in the process becomes more minute and necessary voltage is reduced. However, the infrared transceiver module is formed of an analog circuit typically manufactured by the bipolar process, so its current consumption is relatively large and unlikely to benefit from advances in CMOS processes. In addition, since module is connected to the LED and PD, specific specifications must be satisfied so it is difficult to decrease the current.

However, even among these infrared transceiver modules, since only the driver for driving the LED on the transmitting side is an analog circuit, the current flows only during the instant that the LED is made to emit light and no current flows during other periods. When the LED emits light, a current of several mA to several dozen mA must flow, but the actual period over which this current flows is only when a transmit pulse from the microcomputer is received, so the total power consumption is prevented from becoming so large.

However, in the receive circuit on the receiving side, a constant bias current or base current continues to flow throughout all the circuits regardless of whether or not a valid pulse is received. Specifically, a constant current is consumed in the reception standby state even if a valid pulse is not actually being received.

On the other hand, when the communication system is half-duplex system in which either of transmission and reception is performed at one time, it is possible to halt one of the transmission or reception circuits using the transmission/reception control commands RX/TX from the microcomputer, or if no communication function is to be used at all, the standby control command STB from the microcomputer can be used to halt all circuits in the infrared transceiver module. However, since the apparatus is brought in its reception standby state for most of time when it is set in its communication mode, the current consumption in the receive circuit becomes the bottleneck for reducing the power consumption of the entire system. Moreover, since increase of the transmission rate requires high-rate pulse response, so a problem occurs in that the constant current in the receive circuit must be made large.

By adopting the configuration described above, the infrared transceiver 1 according to the present invention solves all of these problems. The transceiver is brought in its low-rate reception mode in the receive standby state, thus making the current consumption of the entire system small and brought in its state that the data can be received at high rate, by switching to high-rate reception mode immediately after receipt of the guide pulse TG. Thus, it is possible to achieve high signal transmission speeds.

Thereby, since the infrared transceiver 1 also has, in addition to switching of the communication mode ON/OFF and transmission/reception control, the high-rate/low-rate control during reception, current consumption can be greatly reduced during reception standby mode, so the power consumption of an entire system equipped with infrared communication functions can be reduced and thus longer battery life can be achieved.

Note that in the processing shown in Fig. 7, the processing in each decision step need not be performed in a predetermined processing order, but in an optional order based on interrupt signals.

In addition, while the two-stage switching using the guide pulse (signal TG) and data (signal TD) is described in the embodiment, the same concept as in the present invention can be utilized even in the case of adopting a scheme for switching among three or more stages corresponding to multiple systems in which the transmission rate is different for each of a plurality of different guide pulses and a plurality of different types of data. In this case, the infrared transceiver 1 receives a signal TG corresponding to each of a plurality of individual signals TD and the microcomputer 3 properly switches the reception rate in high-rate reception mode depending on the form of the signal TG. Then, the reception of the signal TD transmitted subsequently is performed.

In addition, the constitution of the infrared transmitter side that transmits signals to the aforementioned infrared transceiver 1 according to the predetermined protocol comprises a transmission means that transmits signals, and a transmission control means that controls this transmission means so that at the start of transmission, it transmits a signal of a second signal form that has a pulse rate lower than a signal of a first signal form and that is transmitted prior to said signal of a first signal form. In the infrared transceiver, the transmission control means controls the transmission means that transmits signals so that at the start of transmission, it transmits the aforementioned signal TG which is the signal of a second signal form that has a pulse rate lower than the signal TD which is a signal of a first signal form and that is transmitted prior to said signals TD.

Thereby, the infrared transceiver can transmit the signals used as protocol shown in the Fig. 5. Here, the transmission control means is constituted as one function of the microcomputer that controls the various blocks of this infrared transceiver, and the transmission means is provided with a driving means that drives the LED and is constituted as a transmission processing block that transmits signals to the infrared transceiver 1.

The transceiving method according to the present invention has a transmission step wherein, at the start of transmission, a signal of a second signal form that has a pulse rate lower than a signal of a first signal form is transmitted prior to said signal of a first signal form, and a reception step wherein, upon the reception of a signal of a second signal form, the mode is switched from a first reception mode to a second reception mode with a reception rate higher than this first reception mode and the signal of a first signal form is received. Therefore , a signal of a second signal form is transmitted prior to the signal of a first signal form in the transmission step, and said signal of a second signal form is received in the reception step, so switching from the first reception mode to the second reception mode in order to receive a signal of a first signal form can be performed.

By the transceiving method of the present invention, the reception means that receives signals can be set to a second reception mode with a high reception rate only when receiving a signal of the first signal form.

Thereby, the receiver can perform high-rate communications while also reducing the current consumption in the reception of data.

The receiver according to the present invention comprises a reception means that receives signals by switching between a first reception mode and a second reception having a higher reception rate than this first reception mode, and a control means that, upon reception of a signal of a second signal form, controls the switching of the reception means from the first reception mode to the second reception mode, and allows commencement of the reception of a signal of a first signal form, Therefore, upon reception of a signal of a second signal form, the control means can use a mode switching signal for switching between the first reception mode and the second reception mode with a higher reception rate than this first reception mode to control the switching of the reception means from the first reception mode to the second reception mode, and allows commencement of the reception of a signal of a first signal form.

Thereby, the receiver can be brought in its second reception mode with a high reception rate only when receiving a signal of the first signal form, and thus, the receiver can perform high-rate communications while also reducing the current consumption in the reception of data.

In the receiving method of the present invention, upon the reception of a signal of a second signal form, the mode is switched from a first reception mode to a second reception mode with a reception rate higher than this first reception mode and said signal of a first signal form is received. Therefore, the receiver can be brought in its second reception mode with a high reception rate only when receiving a signal of the first signal form, and thus, the receiver can perform high-rate communications while also reducing the current consumption in the reception of data.

The transmitter of the present invention comprises a transmission means that transmits signals, and a transmission control means that controls the transmission means so that at the start of transmission, it transmits a signal of a second signal form that has a pulse rate lower than a signal of a first signal form and that is transmitted prior to said signal of a first signal form, and thereby, the transmission control means controls the transmission means that transmits signals so that at the start of transmission, it can transmit the signal of a second signal form that has a pulse rate lower than the signal of a first signal form and that is transmitted prior to said signal of a first signal form.

The transmitter allows the receiver side to be brought in the second reception mode with a high reception rate only when receiving a signal of the first signal form. Therefore, the receiver can perform high-rate communications while also reducing the current consumption in the reception of data.

In the transmitting method of the present invention, at the start of transmission, by transmitting the signal of a second signal form that has a pulse rate lower than the signal of a first signal form and that is transmitted prior to said signal of a first signal form, the receiver side can be brought in the second reception mode with a high reception rate only when receiving a signal of the first signal form.

Thereby, the receiver can perform high-rate communications while also reducing the current consumption in the reception of data.

## Claims

1. A transceiver comprising:
a transmission means (12,21,4) that is configured to transmit a signal of a first signal form (TD) having a pulse rate and a signal of a second signal form (TG) that has a pulse rate lower than the pulse rate of the signal of the first signal form (TD), wherein the signal of the second signal form (TG) is transmitted prior to said signal of a first signal form **characterized by** a reception means (12,22,5) that is so configured that, upon reception of said signal of a second signal form (TG), receives said signal of the first signal form (TD) by switching a mode from a first reception mode to a second, reception mode which is a reception mode with a higher reception rate than said first reception mode.

2. The transceiver recited in Claim 1, wherein
at the end of transmission of said signal of a first signal form (TD), said transmission means (12,21,4) transmits said signal including an end signal (TD2) that indicates an end of said signal of a first signal form, and
upon receipt of said end signal (TD2), said transmission means (12,21,4) switches a mode to said first reception mode.

3. The transceiver recited in Claim 1, wherein a current consumption of said transmission means (12,21,4) in said first reception mode is set smaller than the current consumption of said reception means in said second reception mode.

4. The transceiver recited in Claim 1 wherein:
the transmission means (12,21,4) is so configured that it selectively, as a pair, transmits a plurality of information signals in said first signal form (TD) having different pulse rates and a plurality of guide signals in said second signal form (TG) which respectively correspond to said plurality of information signals and which are transmitted prior to the transmission of the information signals, and
the transmission means (12,21,4) is configured such that, upon receipt of each of said guide signals (TG), it switches a mode from a reception standby mode to a reception mode corresponding to the pulse rate of the information signal paired with said guide signal, and receives said information signal.

5. The transceiver recited in claim 1, wherein the transmission means (12,21,4) comprises:
a control means (13) that, upon reception of a signal of a second signal form (TG), controls the switching of the reception means from the first reception mode to the second reception mode, and initiates the reception of a signal of a first signal form (TD).

6. The transceiver recited in Claim 5, wherein
upon receipt of an end signal (TD2) that indicates the end of said signal of a first signal form (TD) that is included in said signal of a first signal form, said control means switches a mode to said first reception mode.

7. The transceiver recited in Claim 5, wherein a current consumption of said transmission means (12,21,4) in said first reception mode is set smaller than the current consumption of said reception means in said second reception mode.

8. The transceiver recited in Claim 5, wherein the transmission means (12,21,4) at the start of transmission, receives a signal of a second signal form (TG) prior to said signal of a first signal form (TD).

9. The transceiver recited in Claim 5, which receives signals by using infrared rays.

10. A signal transceiving method comprising:
a transmission step comprising transmitting, at the start of transmission, a signal of a second signal form (TG) having a pulse rate;
transmitting a signal of a first signal form (TD) said signal of the second signal form (TG) having a pulse rate lower than the pulse rate of the signal of the first signal form (TD) and
transmitting the signal of the second signal form (TG) prior to said signal of a first signal form, **characterized by**
a reception step comprising, upon the reception of a signal of said second signal form (TG), switching the reception mode from a first reception mode to a second reception mode with a reception rate higher than said first reception mode and receiving said signal of a first signal form (TD).

11. The transceiving method recited in Claim 10, wherein
in said transmission step, at the end of transmission of said signal of a first signal form (TD), an end signal (TD2) that indicates an end of this signal of a first signal form is included in said signal of a first signal form, and
in said reception step, upon the receipt of said end signal (TD2), a switch to said first reception mode is performed.

12. The transceiving method recited in Claim 10, wherein
a current consumption of said transmission means (12,21,4) that receives signals by said reception step in said first reception mode is smaller than the current consumption of said reception means in said second reception mode.

## Patentansprüche

1. Sendeempfangseinrichtung, mit:
einer Sendeeinrichtung (12, 21, 4), welche dazu ausgebildet ist, ein Signal einer ersten Signalform (TD) mit einer Pulsrate und ein Signal einer zweiten Signalform (TG), welches eine Pulsrate hat, die niedriger ist als die Pulsrate des Signals der ersten Signalform (TD) zu übertragen, wobei das Signal der zweiten Signalform (TG) vor dem Signal der ersten Signalform übertragen wird,
**gekennzeichnet durch**
eine Empfangseinrichtung (12, 22, 5), welche dazu ausgebildet ist, auf den Empfang des Signals einer zweiten Signalform (TG) hin das Signal der ersten Signalform (TD) zu empfangen **durch** Schalten eines Modus von einem ersten Empfangsmodus zu einem zweiten Empfangsmodus, welcher ein Empfangsmodus mit einer höheren Empfangsrate ist als der erste Empfangsmodus.

2. Sendeempfangseinrichtung nach Anspruch 1,
wobei am Ende der Übertragung des Signals einer ersten Signalform (TD) die Sendeeinrichtung (12, 21, 4) das Signal mit einem Endsignal (TD2) überträgt, welches ein Ende des Signals der ersten Signalform anzeigt, und
wobei auf den Empfang des Endsignals (TD2) hin die Sendeeinrichtung (12, 21, 4) einen Modus in den ersten Empfangsmodus umschaltet.

3. Sendeempfangseinrichtung nach Anspruch 1,
wobei ein Stromverbrauch der Sendeeinrichtung (12, 21, 4) im ersten Empfangsmodus geringer eingestellt ist als der Stromverbrauch der Empfangseinrichtung im zweiten Empfangsmodus.

4. Sendeempfangseinrichtung nach Anspruch 1,
wobei die Übertragungseinrichtung (12, 21, 4) so ausgebildet ist, dass sie als ein Paar eine Mehrzahl von Informationssignalen in der ersten Signalform (TD) mit unterschiedlichen Pulsraten sowie eine Mehrzahl von Führungssignalen in der zweiten Signalform (TG) wahlweise überträgt, welche jeweils mit der Mehrzahl Informationssignale korrespondieren und welche vor der Übertragung der Informationssignale übertragen werden, und
wobei die Sendeeinrichtung (12, 21, 4) derart ausgebildet ist, dass sie auf den Empfang jedes der Führungssignale (TG) hin einen Modus von einem Empfangsbereitschaftsmodus zu einem Empfangsmodus korrespondierend zur Pulsrate des Informationssignals schaltet, welches gepaart ist mit dem Führungssignal, und das Informationssignal empfängt.

5. Sendeempfangseinrichtung nach Anspruch 1, wobei die Übertragungseinrichtung (12, 21, 4) aufweist:
eine Steuereinrichtung (13), welche auf den Empfang eines Signals einer zweiten Signalform (TG) hin das Schalten der Empfangseinrichtung vom ersten Empfangsmodus zum zweiten Empfangsmodus steuert und den Empfang eines Signals einer ersten Signalform (TG) beginnt.

6. Sendeempfangseinrichtung nach Anspruch 5,
wobei auf den Empfang eines Endsignals (TD2) hin, welches das Ende des Signals einer ersten Signalform (TD) anzeigt und welches im Signal einer ersten Signalform enthalten ist, die Steuereinrichtung einen Modus zum ersten Empfangsmodus schaltet.

7. Sendeempfangseinrichtung nach Anspruch 5,
wobei ein Stromverbrauch der Sendeeinrichtung (12, 21, 4) im ersten Empfangsmodus geringer eingestellt ist als der Stromverbrauch der Empfangseinrichtung im zweiten Empfangsmodus.

8. Sendeempfangseinrichtung nach Anspruch 5,
wobei die Sendeeinrichtung (12, 21, 4) zum Beginn einer Übertragung ein Signal einer zweiten Signalform (TG) vor dem Signal einer ersten Signalform (TG) empfängt.

9. Sendeempfangseinrichtung nach Anspruch 5,
welche Signale unter Verwendung von Infrarotstrahlen empfängt.

10. Signalsendeempfangsverfahren, mit einem Übertragungsschritt mit:
am Anfang einer Übertragung Übertragen eines Signals einer zweiten Signalform (TG) mit einer Pulsrate,
Übertragen eines Signals einer ersten Signalform (TD), wobei das Signal der zweiten Signalform (TG) eine Pulsrate aufweist, die niedriger ist als die Pulsrate des Signals der ersten Signalform (TD), und
Übertragen des Signals der zweiten Signalform (TG) vor dem Signal einer ersten Signalform,
**gekennzeichnet durch**
einen Empfangsschritt mit einem Schalten des Empfangsmodus von einem ersten Empfangsmodus zu einem zweiten Empfangsmodus mit einer Empfangsrate, die höher ist als beim ersten Empfangsmodus, und zwar auf den Empfang eines Signals der zweiten Signalform (TG) hin, und mit einem Empfangen des Signals einer ersten Signalform (TD).

11. Sendeempfangsverfahren nach Anspruch 10,
wobei beim Übertragungsschritt am Ende einer Übertragung des Signals einer ersten Signalform (TD) ein Endsignal (TD2), welches ein Ende dieses Signals einer ersten Signalform anzeigt, in das Signal einer ersten Signalform aufgenommen wird und
wobei im Empfangsschritt auf den Empfang des Endsignals (TD2) hinein Schalten zum ersten Empfangsmodus ausgeführt wird.

12. Sendeempfangsverfahren nach Anspruch 10,
wobei ein Stromverbrauch der Sendeeinrichtung (12, 21, 4), welche Signale mittels des Empfangsschritts im ersten Empfangsmodus empfängt, geringer ist als der Stromverbrauch der Empfangseinrichtung im zweiten Empfangsmodus.

## Revendications

1. Émetteur-récepteur comprenant :
un moyen d'émission (12, 21, 4) configuré pour émettre un signal d'une première forme de signal (TD) ayant une certaine vitesse d'impulsions et un signal d'une seconde forme de signal (TG) ayant une vitesse d'impulsions inférieure à la vitesse d'impulsions du signal de la première forme de signal (TD), dans lequel le signal de la seconde forme de signal (TG) est émis avant ledit signal d'une première forme de signal,
**caractérisé par**
un moyen de réception (12, 22, 5) configuré de sorte que lors de la réception dudit signal d'une seconde forme de signal (TG), il reçoit ledit signal de la première forme de signal (TD) en commutant le mode de réception d'un premier mode de réception à un second mode de réception qui est un mode de réception avec une vitesse de réception supérieure à celle dudit premier mode de réception.

2. Émetteur-récepteur selon la revendication 1, dans lequel
à la fin de l'émission dudit signal d'une première forme de signal (TD), ledit moyen d'émission (12, 21, 4) émet ledit signal incluant un signal de fin (TD2) indiquant la fin dudit signal d'une première forme de signal, et
lors de la réception dudit signal de fin (TD2), ledit moyen d'émission (12, 21, 4) commute le mode dans ledit premier mode de réception.

3. Émetteur-récepteur selon la revendication 1, dans lequel la consommation de courant dudit moyen d'émission (12, 21, 4) dans ledit premier mode de réception est fixée à une valeur inférieure à la consommation de courant dudit moyen de réception dans ledit second mode de réception.

4. Émetteur-récepteur selon la revendication 1, dans lequel :
le moyen d'émission (12, 21, 4) est configuré de sorte qu'il émet de façon sélective sous la forme d'une paire une pluralité de signaux d'information dans la dite première forme de signal (TD) ayant des vitesses d'impulsions différentes et une pluralité de signaux de guidage dans la dite seconde forme de signal (TG) correspondant respectivement à ladite pluralité de signaux d'information et qui sont émis avant l'émission des signaux d'information, et
le moyen d'émission (12, 21, 4) est configuré de sorte que lors de la réception de chacun desdits signaux de guidage (TG), il commute le mode d'un mode d'attente de réception à un mode de réception correspondant à la vitesse d'impulsions du signal d'information apparié avec ledit signal de guidage, et reçoit ledit signal d'information.

5. Émetteur-récepteur selon la revendication 1, dans lequel le moyen d'émission (12, 21, 4) comprend :
un moyen de commande (13) qui, lors de la réception d'un signal d'une seconde forme de signal (TG) commande la commutation du moyen de réception du premier mode de réception au second mode de réception et initialise la réception d'un signal d'une première forme de signal (TD).

6. Émetteur-récepteur selon la revendication 5, dans lequel
lors de la réception d'un signal de fin (TD2) indiquant la fin dudit signal d'une première forme de signal (TD) qui est inclus dans ledit signal d'une première forme de signal, ledit moyen de commande commute le mode vers ledit premier mode de réception.

7. Émetteur-récepteur selon la revendication 5, dans lequel la consommation de courant dudit moyen d'émission (12, 21, 4) dans ledit premier mode de réception est fixée à une valeur inférieure à la consommation de courant dudit moyen de réception dans ledit second mode de réception.

8. Émetteur-récepteur selon la revendication 5, dans lequel le moyen d'émission (12, 21, 4) au début de l'émission, reçoit un signal d'une seconde forme de signal (TG) avant ledit signal d'une première forme de signal (TD).

9. Émetteur-récepteur selon la revendication 5, qui reçoit des signaux en utilisant des rayons infrarouges.

10. Procédé d'émission-réception de signaux comprenant :
une étape d'émission comprenant
l'émission, au début de l'émission, d'un signal d'une seconde forme de signal (TG) ayant une certaine vitesse d'impulsions ;
l'émission d'un signal d'une première forme de signal (TD),
ledit signal de la seconde forme de signal (TG) ayant une vitesse d'impulsions inférieure à la vitesse d'impulsions du signal de la première forme de signal (TD) et
l'émission du signal de la seconde forme de signal (TG) avant ledit signal d'une première forme de signal, **caractérisé par**
une étape de réception comprenant, lors de la réception d'un signal de ladite seconde forme de signal (TG), la commutation du mode de réception d'un premier mode de réception à un second mode de réception avec une vitesse de réception supérieure à celle dudit premier mode de réception et la réception dudit signal d'une première forme de signal (TD).

11. Procédé d'émission-réception selon la revendication 10, dans lequel
à ladite étape d'émission, à la fin de l'émission dudit signal d'une première forme de signal (TD), un signal de fin (TD2) indiquant la fin de ce signal d'une première forme de signal est inclus dans ledit signal d'une première forme de signal, et
à ladite étape de réception, lors de la réception dudit signal de fin (TD2), une commutation dans ledit premier mode de réception est effectuée.

12. Procédé d'émission-réception selon la revendication 10, dans lequel
la consommation de courant dudit moyen d'émission (12, 21, 4) recevant des signaux par ladite étape de réception dans ledit premier mode de réception est inférieure à la consommation de courant dudit moyen de réception dans ledit second mode de réception.
